# FASCICULE DE BREVET EUROPEEN

(11) **EP 2 469 209 B1**
(45) Date de publication et mention de la délivrance du brevet: **14.10.2015**
(21) Numéro de dépôt: 11192184.7
(22) Date de dépôt: 06.12.2011
(51) Int. Cl.: F02B 29/04, F28D 21/00, F28F 9/00, F28F 9/26, F28F 9/02, F28D 7/16

(54) **Boîtier d'échangeur de chaleur, échangeur de chaleur muni d'un tel boîtier et module d'admission équipé d'un tel échangeur**
Wärmetauschergehäuse, mit einem solchen Gehäuse ausgestatteter Wärmetauscher, und Einlassmodul, das mit einem solchen Wärmetauscher ausgestattet ist
Heat-exchanger box, heat exchanger provided with such a box and intake module provided with such a heat exchanger

(30) Priorité: 21.12.2010 FR 1060939
(43) Date de publication de la demande: 27.06.2012
(73) Titulaire: Valeo Systèmes Thermiques, 78320 Le Mesnil-Saint-Denis (FR)
(72) Inventeur: Vallee, Nicolas, 51110 Bazancourt (FR); Schild, Olivier, 51430 Tinqueux (FR); Naudin, Yoann, 08300 Saint Loup en Champagne (FR)
(74) Mandataire: Metz, Gaëlle

(56) Documents cités:
- WO-A1-2008/091918
- WO-A1-2009/156363
- WO-A1-2009/156364
- DE-A1-102009 015 467
- FR-A1- 2 936 043
- US-A1- 2008 156 472

## Description

La présente invention concerne un boîtier d'échangeur de chaleur, un échangeur de chaleur muni d'un tel boîtier et un module d'admission équipé d'un tel échangeur.

Il est connu des boîtiers d'admission permettant de répartir des gaz d'admission, notamment constitué d'air et/ou de gaz d'échappement recirculés, dans les cylindres d'un moteur. Il est également connu de prévoir des échangeurs de chaleur disposés dans un boîtier du module pour refroidir les gaz d'admission à l'aide d'un liquide caloporteur.

Différents types de boîtier ont déjà été proposés. Selon une première solution, il s'agit de boîtiers comprenant un corps définissant à la fois un logement pour l'échangeur ainsi qu'une boîte d'entrée des gaz d'admission et une boîte de sortie desdits gaz. Un couvercle ferme ledit corps. Cependant, une telle solution présente des difficultés de tenue à la pression.

Selon une autre solution, le boîtier est constitué d'une armature accueillant l'échangeur. Les boîtes d'entrée et de sortie d'air sont rapportées sur l'armature. Une telle solution est plus satisfaisante en termes de tenue à la pression. Pour faciliter l'accrochage des boîtes d'entrée et de sortie sur l'armature, il a été proposé de munir celle-ci des bords relevés bordant leur face en regard des boîtes.

Les documents WO2009156364 et WO2009156363 divulguent par exemple des boîtiers d'échangeur de chaleur. Cependant, un besoin demeure de solutions d'accrochage permettant de fiabiliser le module, ceci en particulier pour des armatures de fortes épaisseurs, c'est-à-dire supérieure à 1,5 mm.

L'invention se propose de résoudre les problèmes précédents et concerne à cette fin un boîtier d'échangeur de chaleur comprenant un corps définissant un logement propre à accueillir un faisceau de l'échangeur de chaleur, ledit corps présentant un bord de contact, destiné à permettre l'accrochage d'un collecteur de l'échangeur, ledit corps comprenant des plaques assemblées entre elles, l'une au moins desdites plaques, dite rigidifiante, présente un ou des boids relevés s'étendant dans une direction sécante au bord de contact.

Selon l'invention, le bord relevé présente une découpe à son ou ses extrémités prévues au voisinage du ou des bords de contact, la découpe présente une portion en chanfrein dont l'une des extrémés est confondue avec le bord de contact correspondant, le ou lesdits bords relevés étant configurés de façon à permettre le passage d'une tête d'outil au niveau dudit bord de contact de façon à autoriser la réalisation d'un cordon de soudure entre ledit boîtier et ledit collecteur le long du bord de contact, au moins au niveau du ou desdits bord relevés.

On facilite de la sorte l'exécution de la soudure et on fiabilise l'ensemble, en particulier pour des plaques de fortes épaisseurs, c'est-à-dire, par exemple, pour des plaques présentant une épaisseur supérieure à 1,5 mm.

Selon un différent mode de réalisation:
- la découpe présente une portion, dite plane, parallèle à un fond de la plaque rigidifiante muni du bord relevé dans laquelle ladite découpe est ménagée, ladite portion plane étant prolongée par ledit chanfrein.

Selon un aspect de l'invention, ledit bord de contact est défini par l'épaisseur d'une ou plusieurs desdites plaques, notamment de toutes lesdites plaques. On facilite encore de la sorte une fixation par soudage.

On pourra ainsi prévoir, toujours en complément ou de façon distincte des caractéristiques précédentes, les caractéristiques qui suivent :
- le bord de contact est défini le long de l'un de ses côtés par l'épaisseur d'une desdites plaques rigidifiantes et, le long d'un côté adjacent, par une autre des plaques du boîtier, prévue plane, ladite plaque plane prenant appui sur le bord relevé de l'aplaque rigidifiante adjacente,
- ladite plaque plane est munie d'une découpe venant en correspondance de la découpe prévue sur le bord relevé,
- ladite plaque plane et ladite plaque rigidifiante contre laquelle ladite plaque plane est en appui présente des moyens de pré assemblage mutuels,
- lesdits moyens de pré assemblage comprennent une bride prévue sur ladite plaque plane, ladite bride étant repliée sur le bord relevé avec lequel la plaque plane est en contact,
- lesdits moyens de pré assemblage comprennent une encoche, prévue au niveau dudit bord plié sur lequel la plaque plane est en appui, ladite bride étant repliée dans ladite encoche,

Selon un aspect de l'invention, ledit boîtier est constitué de quatre plaques. On pourra alors prévoir que deux desdites quatre plaques sont des plaques rigidifiantes prévues en vis-à-vis et les deux autres sont des plaques planes prenant appui sur les bords relevés des plaques rigidifiantes.

Selon une variante, le boîtier est constitué de deux plaques. On pourra alors prévoir que l'une des plaques présente un profil en U, les branches du U présentant à leur extrémité distale ledit bord relevé, et l'autre plaque est une dite plaque plane, en appui sur lesdits bords relevés.

L'invention concerne encore un échangeur de chaleur permettant un échange de chaleur entre deux fluides, ledit échangeur comprenant un boîtier tel que décrit plus haut.

L'échangeur comprend en outre, par exemple, un collecteur permettant la circulation de l'un des fluides, collecteur avec lequel le boîtier est relié par un cordon de soudure réalisé au niveau du bord de contact. Le cordon de soudure pourra alors présenter une largeur plus importante au niveau de ladite découpe.

L'invention concerne encore un module d'admission comprenant un échangeur tel que décrit plus haut.

L'invention sera mieux comprise à la lumière de la description suivante qui n'est donnée qu'à titre indicatif et qui n'a pas pour but de la limiter, accompagnée des dessins joints parmi lesquels :
- La figure 1 représente de façon schématique, en perspective, un exemple de module d'admission d'air selon l'invention,
- La figure 2 représente en vue de face le bord de contact du boîtier du module de la figure 1,
- La figure 3 détaille, en perspective, une partie du module d'admission d'air de la figure 1, selon un premier angle de vue
- La figure 4 présente, en perspective, la partie du module illustré à la figure 3, selon un angle de vue différent,
- La figure 5 illustre, en perspective, une variante de réalisation.

L'invention concerne un boîtier d'échangeur de chaleur, un échangeur de chaleur, notamment pour automobile, muni d'un tel boîtier et un module d'admission équipé dudit échangeur.

L'échangeur de chaleur est, par exemple, un refroidisseur d'air de suralimentation du type refroidi à eau, c'est-à-dire, un échangeur de chaleur dans lequel un flux de gaz d'admission, comprimé, échange de la chaleur avec un liquide caloporteur, notamment un liquide antigel, constitué d'une mélange d'eau et de glycol. Il pourra s'agir d'un liquide caloporteur d'une boucle de refroidissement basse température du véhicule. Bien sûr, le boîtier conforme à l'invention pourra équiper d'autres types d'échangeur.

L'échangeur pourra être intégré dans un module d'admission, c'est-à-dire, un module permettant de répartir les gaz d'admission, en l'occurrence refroidi par l'échangeur, dans un moteur thermique, notamment de véhicule automobile.

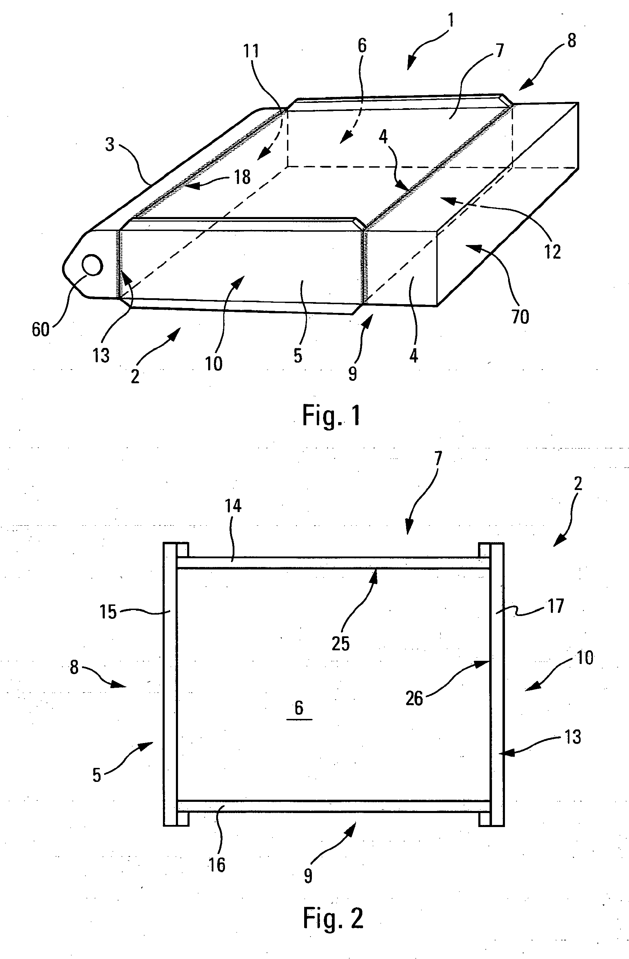

Comme illustré à la figure 1, le module conforme à l'invention, comprend, par exemple, outre l'échangeur 1 muni de son boîtier 2, un collecteur d'entrée 3 des gaz d'alimentation et/ou un collecteur de sortie des gaz d'alimentation 4. Ledit collecteur de sortie des gaz d'alimentation 4 ou, en variante, directement ledit boîtier 2 pourront être prévus aptes à être montés sur la culasse du moteur, non-représentée. Le collecteur d'entrée comprend, par exemple, un orifice d'entrée 60, ici de gaz d'admission. Le collecteur de sortie comprend une face de sortie 70, ici de gaz d'admission.

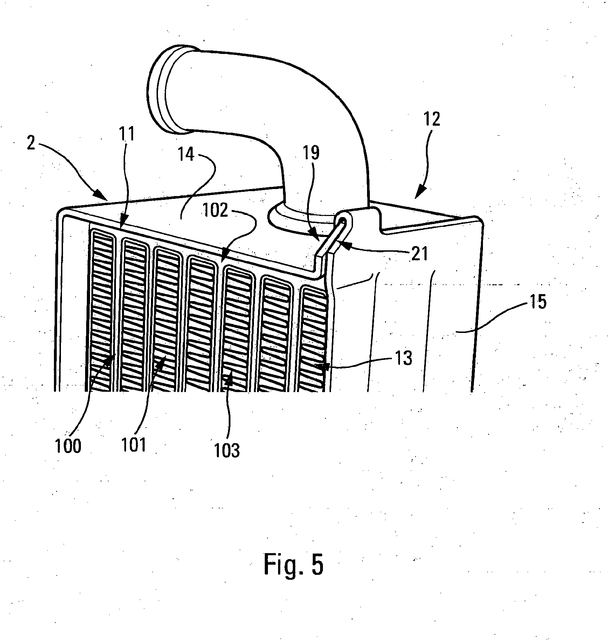

Le boîtier 2 comprend un corps 5 définissant un logement 6 propre à accueillir un faisceau 100, non-représenté aux figures 1 à 4 mais visible à la figure 5, de l'échangeur de chaleur. Le logement présente, par exemple, quatre faces 7, 8, 9, 10 et/ou définit, notamment, une bouche d'entrée 11, ici des gaz d'alimentation, communiquant avec le collecteur d'entrée 3, et/ou une bouche de sortie des gaz d'alimentation 12, communiquant avec le collecteur de sortie 4 ou, directement, avec la culasse.

Le faisceau comprend, par exemple, un empilement de plaques définissant de façon alternée des lames de circulation d'un premier fluide, ici les gaz d'alimentation, et des lames de circulation d'un second fluide, ici le liquide de refroidissement. Les lames communiquent entre elles pour la circulation du second fluide. Les lames de circulation du premier fluide communique avec les bouches d'entrée/sortie 11, 12 du boîtier 2.

Selon la variante de la figure 5, il pourra aussi s'agir d'un faisceau de tubes 101 aptes à être parcourus par le premier fluide. Les faces d'entrée/sortie 11, 12 de l'échangeur sont alors munies de plaques collectrices 102 au niveau desquels les tubes débouchent dans les collecteurs d'entrée 3 et/ou de sortie 4 des gaz d'admission. Le second fluide circule dans le corps 5 au contact des tubes 101. Des intercalaires 103 et/ou perturbateurs pourront être prévus dans et/ou entre les tubes 101.

Les différents composants du faisceau sont, par exemple, en aluminium e/ou alliages d'aluminium.

Comme illustré à la figure 2, on constate que ledit corps présente un bord de contact 13, destiné à permettre l'accrochage d'un des collecteurs 3, 4 de l'échangeur. Ledit bord de contact pourra être prévu aussi bien du côté de la bouche d'entrée 11 que de la bouche de sortie 12.

Ledit corps 5 comprend des plaques 14, 15, 16, 17, par exemple en aluminium et/ou alliage d'aluminium, assemblées entre elles.

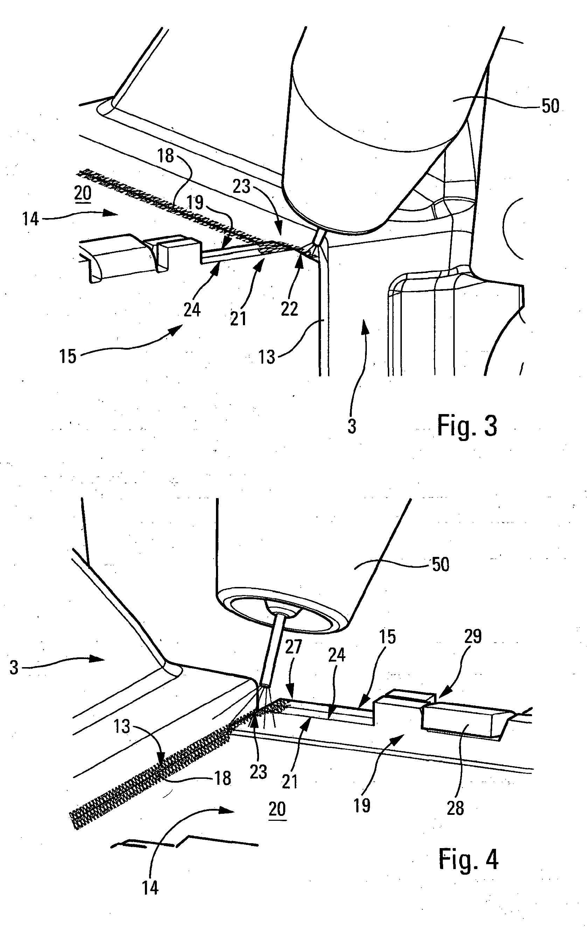

Comme illustré aux figures 3 à 5, selon l'invention, l'une 14 au moins desdites plaques, dite rigidifiante, présente un ou des bords relevés 19 s'étendant dans une direction orthogonale au bord de contact 13. Le ou lesdits bords relevés 19 sont configurés de façon à permettre le passage d'une tête d'outil au niveau du ou desdits bords de contact 13.

Il pourra en particulier s'agir d'une torche de soudage 50 servant à la réalisation d'un cordon de soudure 18.

On facilite de la sorte un bon accrochage du ou des collecteurs sur le boîtier, en particulier pour des plaques de fortes épaisseurs.

A ce sujet, lesdites plaques 14, 15, 16, 17 présentent, par exemple, une épaisseur supérieure à 1,5 mm, notamment de 2 à 4 mm. Elles sont assemblées entre elles, par exemple, par brasage.

Lesdits bords relevés sont orientés, par exemple, à 90° par rapport à un fond 20 de la plaque 14.

Le bord relevé 19 présente, notamment, une découpe 21 à son ou ses extrémités prévus au voisinage du ou des bords de contact 13 correspondant. La découpe 21 présente, par exemple, une portion 23 en chanfrein dont l'une des extrémités est confondue avec le bord de contact 13. Ledit chanfrein pourra être orienté selon un angle d'environ 60°. On facilite de la sorte la trajectoire de la torche de soudage le long du bord de contact 13, en particulier la rotation de la torche au niveau des sommets du boîtier.

La découpe pourra aussi présenter une portion 24, dite plane, parallèle au fond 20 de la plaque rigidifiante 14, ladite portion plane 24 étant prolongée par ledit chanfrein 23. Une telle caractéristique permet un mouvement transversal de la torche de soudage et permet de disposer d'un cordon de soudure plus large à ce niveau.

Selon un aspect de l'invention, ledit bord 13 est défini par l'épaisseur d'une ou plusieurs desdites plaques 14, 15, 16, 17, voir de toutes lesdites plaques, comme visible à la figure 2. On facilite ainsi de façon supplémentaire la réalisation d'un cordon de soudure 18, visible à la figure 1, au niveau du bord de contact 13, en particulier pour des plaques de fortes épaisseurs.

Selon les modes de réalisation illustrés, le bord de contact 13 est défini le long de l'un de ses côtés 25 par l'épaisseur d'une 14 desdites plaques rigidifiantes et, le long d'un côté adjacent 26, par une autre 15 des plaques du boîtier, prévue plane, ladite plaque plane 15 prenant appui sur le bord relevé 19 de la plaque rigidifiante 14.

Ladite plaque plane 15 est ici munie d'une découpe 27 venant en correspondance de la découpe prévue sur le bord relevé.

Ladite plaque plane 15 et ladite plaque rigidifiante 14 contre laquelle ladite plaque plane est en appui pourront présenter des moyens de pré assemblage mutuels.

Lesdits moyens de pré assemblage comprennent, par exemple, une bride 28, prévue sur ladite plaque plane 15, ladite bride 28 étant repliée sur le bord relevé 19. Ladite bride 28 est, notamment, issue de matière. Lesdits moyens de pré assemblage pourront encore comprendre une encoche 29, prévue au niveau dudit bord plié 19, ladite bride 28 étant repliée dans ladite encoche 29. En variante, la bride pourra se trouver sur la plaque rigidifiante 14 et l'encoche sur la plaque plane 15.

Selon le mode de réalisation des figures 1 à 4, le boîtier est constitué de quatre plaques. Deux des quatre plaques 14, 16 sont des plaques rigidifiantes prévues en vis-à-vis et deux autres 15, 17 sont des plaques planes prenant appui sur les bords relevés 19 des plaques rigidifiantes.

Selon le mode de réalisation de la figure 5, le boîtier est constitué de deux plaques 14, 15. Une 14 des plaques présente un profil en U, les branches du U présentant à leur extrémité distale ledit bord relevé 19. Ladite plaque est obtenue, par exemple, par pliage d'une feuille de matière, par exemple de l'aluminium ou alliages d'aluminium. L'autre plaque 15 est une dite plaque plane, en appui sur lesdits bords relevés 19. On peut observer que, ici, le bord relevé 19 ne présente qu'une découpe 21 partielle. Autrement dit, le chanfrein ne se prolonge pas jusqu'au bord de contact 13. A la figure 5, on voit également une tubulure 80 d'entrée/sortie du liquide de refroidissement dans le boîtier 2.

Comme déjà dit, l'invention concerne aussi un échangeur de chaleur comprenant un boîtier tel que décrit plus haut.

Il concerne aussi un module d'admission. Celui-ci pourra accueillir différents autres échangeurs et/ou des actionneurs permettant de réguler les débits de fluide, notamment à travers le ou les échangeurs et/ou des circuits by-pass qu'il intègre.

## Revendications

1. Boîtier d'échangeur de chaleur comprenant un corps (5) définissant un logement (6) propre à accueillir un faisceau de l'échangeur de chaleur, ledit corps (5) présentant un bord de contact (13), destiné à permettre l'accrochage d'un collecteur (3,4) de l'échangeur, ledit corps (5) comprenant des plaques (14, 15, 16, 17) assemblées entre elles, l'une (14, 16) au moins desdites plaques, dite rigidifiante, présente un ou des bords relevés (19) s'étendant dans une direction sécante au bord de contact (13) **caractérisé en ce que** ledit bord relevé (19) présente une découpe (21) à son ou ses extrémités prévus au voisinage du ou des bords de contact (13) correspondant, ladite découpe (21) présentant une portion (23) en chanfrein dont l'une des extrémités est confondue avec le bord de contact (13) de manière à ce que le ou lesdits bords relevés (19) étant configurés de façon à permettre le passage d'une tête d'outil (50) au niveau dudit bord de contact (13) de façon à autoriser la réalisation d'un cordon de soudure entre le boîtier et ledit collecteur le long du bord de contact, au moins au niveau du ou desdits bord relevés.

2. Boîtier selon la revendication 1 dans lequel la découpe (21) présente une portion (24), dite plane, parallèle à un fond (20) de la plaque rigidifiante (14) munie du bord relevé (19) dans laquelle ladite découpe (21) est ménagée, ladite portion plane (24) étant prolongée par ledit chanfrein (23).

3. Boîtier selon l'une quelconque des revendications précédentes dans lequel ledit bord de contact (13) est défini par l'épaisseur d'une ou plusieurs desdites plaques.

4. Boîtier selon la revendication précédente dans lequel le bord de contact (13) est défini le long de l'un (25) de ses côtés par l'épaisseur d'une desdites plaques rigidifiantes (14) et, le long d'un côté adjacent (26), par une autre (15) des plaques du boîtier, prévue plane, ladite plaque plane (15) prenant appui sur le bord relevé (19) de la plaque rigidifiante adjacente (14).

5. Boîtier selon la revendication précédente dans lequel ladite plaque plane (15) est munie d'une découpe (24) venant en correspondance de la découpe prévue sur le bord relevé (19).

6. Boîtier selon l'une quelconques des revendications 4 ou 5 dans lequel ladite plaque plane (15) et ladite plaque rigidifiante (14) contre laquelle ladite plaque plane (15) est en appui présente des moyens de pré assemblage mutuels.

7. Boîtier selon l'une quelconque des revendications précédentes, prévu constitué de quatre plaques (14, 15, 16, 17).

8. Boîtier selon la revendication précédente dans lequel deux (14, 16) des quatre plaques sont des plaques rigidifiantes prévues en vis-à-vis et deux autres (15, 17) sont des plaques planes prenant appui sur les bords relevés des plaques rigidifiantes.

9. Boîtier selon l'une quelconque des revendications 1 à 6, prévu constitué de deux plaques (14, 15).

10. Boîtier selon la revendication précédente dans lequel une (14) des plaques présente un profil en U, les branches du U présentant à leur extrémité distale ledit bord relevé (19) et l'autre plaque (15) est une dite plaque plane, en appui sur lesdits bords relevés (19).

11. Echangeur de chaleur permettant un échange de chaleur entre deux fluides, ledit échangeur comprenant un boîtier (2) selon l'une quelconque des revendications précédentes.

12. Echangeur selon la revendication précédente comprenant en outre un collecteur (3, 4) permettant la circulation de l'un des fluides, collecteur avec lequel le boîtier (2) est relié par un cordon de soudure réalisé au niveau du bord de contact.

13. Module d'admission comprenant un échangeur selon l'une quelconque des revendications 11 ou 12.

## Patentansprüche

1. Wärmetauschergehäuse, welches einen Körper (5) aufweist, der eine Aufnahme (6) definiert, welche geeignet ist, ein Bündel des Wärmetauschers aufzunehmen, wobei der Körper (5) einen Kontaktrand (13) aufweist, der dazu bestimmt ist, das Anhängen eines Sammlers (3, 4) des Wärmetauschers zu ermöglichen, wobei der Körper (5) miteinander verbundene Platten (14, 15, 16, 17) aufweist, wobei wenigstens eine (14, 16) der Platten, Versteifungsplatte genannt, einen oder mehrere erhöhte Ränder (19) aufweist, die sich in einer den Kontaktrand (13) schneidenden Richtung erstrecken, **dadurch gekennzeichnet, dass** der erhöhte Rand (19) einen Ausschnitt (21) an seinem Ende oder seinen Enden aufweist, das bzw. die in der Nähe des entsprechenden Kontaktrandes bzw. der entsprechenden Kontaktränder (13) vorgesehen ist bzw. sind, wobei der Ausschnitt (21) einen abgeschrägten Abschnitt (23) aufweist, von dem eines der Enden mit dem Kontaktrand (13) zusammenfällt, derart, dass der erhöhte Rand oder die erhöhten Ränder (19) dafür ausgebildet ist bzw. sind, das Hindurchführen eines Werkzeugkopfes (50) an dem Kontaktrand (13) zu ermöglichen, um die Ausführung einer Schweißnaht zwischen dem Gehäuse und dem Sammler entlang des Kontaktrandes wenigstens an dem erhöhten Rand oder den erhöhten Rändern zu gestatten.

2. Gehäuse nach Anspruch 1, wobei der Ausschnitt (21) einen sogenannten ebenen Abschnitt (24) aufweist, der zu dem Boden (20) der Versteifungsplatte (14) parallel ist, die mit dem erhöhten Rand (19) ausgestattet ist, in welchem der Ausschnitt (21) ausgebildet ist, wobei der ebene Abschnitt (24) durch die Abschrägung (23) verlängert ist.

3. Gehäuse nach einem der vorhergehenden Ansprüche, wobei der Kontaktrand (13) durch die Dicke einer oder mehrerer der Platten definiert ist.

4. Gehäuse nach dem vorhergehenden Anspruch, wobei der Kontaktrand (13) entlang der einen (25) seiner Seiten durch die Dicke einer der Versteifungsplatten (14) definiert ist, und entlang einer benachbarten Seite (26) durch eine andere (15) der Platten des Gehäuses, die eben vorgesehen ist, wobei sich diese ebene Platte (15) auf dem erhöhten Rand (19) der benachbarten Versteifungsplatte (14) abstützt.

5. Gehäuse nach dem vorhergehenden Anspruch, wobei die ebene Platte (15) mit einem Ausschnitt (24) versehen ist, der in eine dem an dem erhöhten Rand (19) vorgesehenen Ausschnitt entsprechende Position gelangt.

6. Gehäuse nach einem der Ansprüche 4 oder 5, wobei die ebene Platte (15) und die Versteifungsplatte (14), auf der sich die ebene Platte (15) abstützt, Mittel zur Vormontage aneinander aufweisen.

7. Gehäuse nach einem der vorhergehenden Ansprüche, welches als von vier Platten (14, 15, 16, 17) gebildet vorgesehen ist.

8. Gehäuse nach dem vorhergehenden Anspruch, wobei zwei (14, 16) der vier Platten Versteifungsplatten sind, die einander gegenüberliegend vorgesehen sind, und zwei andere Platten (15, 17) ebene Platten sind, die sich auf den erhöhten Rändern der Versteifungsplatten abstützen.

9. Gehäuse nach einem der Ansprüche 1 bis 6, welches als von zwei Platten (14, 15) gebildet vorgesehen ist.

10. Gehäuse nach dem vorhergehenden Anspruch, wobei eine (14) der Platten ein U-förmiges Profil aufweist, wobei die Schenkel des "U" an ihrem distalen Ende den erhöhten Rand (19) aufweisen, und wobei die andere Platte (15) eine besagte ebene Platte ist, die sich auf den erhöhten Rändern (19) abstützt.

11. Wärmetauscher, der einen Wärmeaustausch zwischen zwei Fluiden ermöglicht, wobei der Wärmetauscher ein Gehäuse (2) nach einem der vorhergehenden Ansprüche aufweist.

12. Wärmetauscher nach dem vorhergehenden Anspruch, welcher außerdem einen Sammler (3, 4) aufweist, der die Zirkulation eines der Fluide ermöglicht, wobei das Gehäuse (2) mit diesem Sammler durch eine Schweißnaht verbunden ist, die an dem Kontaktrand ausgeführt ist.

13. Einlassmodul, welches einen Wärmetauscher nach einem der Ansprüche 11 oder 12 aufweist.

## Claims

1. Heat exchanger box comprising a body (5) defining a housing (6) suitable for accommodating a bundle of the heat exchanger, the said body (5) having a contact edge (13) intended to allow the attachment of a manifold (3, 4) of the heat exchanger, the said body (5) comprising plates (14, 15, 16, 17) assembled to one another, at least one (14, 16) of the said plates, namely a stiffening plate, having one or more raised edges (19) extending in a direction secant to the contact edge (13), **characterized in that** the said raised edge (19) has a cutout (21) at its end or ends provided in the vicinity of the corresponding contact edge or edges (13), the said cutout (21) having a chamfered portion (23) of which one of the ends merges with the contact edge (13) in such a way that the said raised edge or edges (19) are configured so as to allow the passage of a head of a tool (50) at the said contact edge (13) so as to allow the production of a weld seam between the box and the said manifold along the contact edge, at least at the said raised edge or edges.

2. Box according to Claim 1, in which the cutout (21) has a portion (24), namely a flat portion, parallel to a bottom (20) of the stiffening plate (14) provided with the raised edge (19) in which the said cutout (21) is formed, the said flat portion (24) being extended by the said chamfer (23).

3. Box according to either one of the preceding claims, in which the said contact edge (13) is defined by the thickness of one or more of the said plates.

4. Box according to the preceding claim, in which the contact edge (13) is defined, along one (25) of its sides, by the thickness of one of the said stiffening plates (14) and, along an adjacent side (26), by another (15) of the plates of the box, which other plate is flat, the said flat plate (15) bearing on the raised edge (19) of the adjacent stiffening plate (14).

5. Box according to the preceding claim, in which the said flat plate (15) is provided with a cutout (24) coming into correspondence with the cutout provided on the raised edge (19).

6. Box according to either one of Claims 4 and 5, in which the said flat plate (15) and the said stiffening plate (14) against which the said flat plate (15) bears have mutual preassembly means.

7. Box according to any one of the preceding claims, which is composed of four plates (14, 15, 16, 17).

8. Box according to the preceding claim, in which two (14, 16) of the four plates are stiffening plates provided opposite one another and two others (15, 17) are flat plates bearing on the raised edges of the stiffening plates.

9. Box according to any one of Claims 1 to 6, which is composed of two plates (14, 15).

10. Box according to the preceding claim, in which one (14) of the plates has a U-shaped profile, the branches of the U having the said raised edge (19) at their distal end, and the other plate (15) is a said flat plate bearing on the said raised edges (19).

11. Heat exchanger allowing heat exchange between two fluids, the said heat exchanger comprising a box (2) according to any one of the preceding claims.

12. Heat exchanger according to the preceding claim, additionally comprising a manifold (3, 4) allowing the circulation of one of the fluids, with which manifold the box (2) is connected by a weld seam produced at the contact edge.

13. Intake module comprising a heat exchanger according to either one of Claims 11 and 12.
